# EUROPÄISCHE PATENTSCHRIFT

(11) **EP 1 068 103 B1**
(45) Veröffentlichungstag und Bekanntmachung des Hinweises auf die Patenterteilung: **19.12.2001**
(21) Anmeldenummer: 99913254.1
(22) Anmeldetag: 15.03.1999
(51) Int. Cl.: B60R 21/00

(54) **Sicherheitsvorrichtung für ein Kraftfahrzeug mit einem Mehrkammer-Airbag**
Safety device for a motor vehicle with a multi-chamber airbag
Dispositif de sécurité pour automobile avec un airbag à chambre multiple

(30) Priorität: 09.04.1998 DE 19816075
(43) Veröffentlichungstag der Anmeldung: 17.01.2001
(73) Patentinhaber: Volkswagen Aktiengesellschaft, 38436 Wolfsburg (DE)
(72) Erfinder: Sinnhuber, Ruprecht, 38518 Gifhorn (DE)
(86) Internationale Anmeldenummer: EP9901677
(87) Internationale Veröffentlichungsnummer: WO9952744

(56) Entgegenhaltungen:
- EP-A- 0 812 741
- EP-A- 0 836 971
- WO-A-98/26960
- DE-A- 4 041 049
- GB-A- 2 289 653
- US-A- 5 762 367
- PATENT ABSTRACTS OF JAPAN vol. 015, no. 053 (M-1079), 7. Februar 1991 (1991-02-07) & JP 02 286448 A (MAZDA MOTOR CORP), 26. November 1990 (1990-11-26)

## Beschreibung

Die Erfindung betrifft eine Sicherheitsvorrichtung für ein Kraftfahrzeug mit einem Mehrkammer-Airbag nach dem Oberbegriff des Anspruchs 1.

Sicherheitsvorrichtungen für ein Kraftfahrzeug mit einem Mehrkammer-Airbag sind in unterschiedlichen Ausführungsformen und unterschiedlichen Anordnungen allgemein bekannt. Insbesondere sind Airbaganordnungen in Front-, Seiten- und Kopfaufprallbereich von Insassen bekannt Alle diese Airbags sind jeweils bei einem Fahrzeugaufprall in Abhängigkeit der Aufprallverzögerung und Aufprallrichtung über einen zugeordneten aktivierbaren Gasgenerator aufblasbar, um einen Aufprall eines Insassen gedämpft abzufangen.

Ein Problem dieser Anordnungen besteht darin, daß von einem sich aufblasenden Airbag eine ungünstige Aggressivität gegenüber Insassen oder Gegenständen im Aufblasbereich ausgehen kann. Insbesondere treten diese Probleme auf bei Insassen außerhalb einer Normalposition (out of position; OOP), wie beispielsweise für ein Kind, das vor einem Sitz steht oder für einen Erwachsenen, der weit nach vorne gelehnt sitzt und für Gegenstände auf einem Sitz, wie beispielsweise einen dort angebrachten Kindersitz.

Es sind bereits Meßanordnungen bekannt, um solche out of Position-Situationen bei der Aktivierung eines Airbags festzustellen und ggf. eine Airbagauslösung zu verhindern oder nur reduziert vorzunehmen. Dazu sind insbesondere berührungslos arbeitende Abstandsmeßanordnungen mit Infrarot- und/oder Ultraschallsensoren sowie Gewichtssensoren bekannt. Diese Anordnungen sind aufwendig und teuer.

Eine gattungsbildende Sicherheitsvorrichtung beschreibt die EP-A-0 812 741. Bei dieser Sicherheitsvorrichtung ist einem Vorderteil des als Gassack ausgebildeten Airbags ein Abtastmedium zugeordnet Dieses ist in der Weise ausgebildet, daß es die Vorschubbewegung des Airbags mit ausführt. Es ist weiter eine Auswerteeinrichtung vorgesehen, welche die Vorschubgeschwindigkeit des Abtastmediums und damit des in den Fahrgastraum hineinbewegenden Airbags feststellt Die von der Auswerteeinrichtung erfaßten Vorschublängen und/oder Vorschubzeiten können genutzt werden, um das Füllverhalten des Airbags in Richtung einer Gasmengenreduzierung oder einer Unterbindung der Gaszufuhr zu beeinflussen.

Einen ähnlichen Wirkmechanismus beschreibt die nicht vorveröffentlichte EP-A-0 836 971.

Aufgabe der Erfindung ist es, eine gattungsgemäße Sicherheitsvorrichtung für ein Kraftfahrzeug mit einem Mehrkammer-Airbag so weiterzubilden, daß deren Aggressivität mit einer einfachen und unmittelbar wirkenden Erkennung für eine out of position-Situation reduziert wird.

Diese Aufgabe wird mit den Merkmalen des Anspruchs 1 gelöst.

Gemäß Anspruch 1 weist der Mehrkammer-Airbag wenigstens einen, relativ kleinvolumigen, fingerartig mit wenig Energie schnell aufblasbaren Tastairbag mit Tastfunktion auf, welcher in den Aufblasbereich wenigstens einer weiteren, großvolumigeren Airbagkammer mit Abstützfunktion aufblasbar und/oder bewegbar ist und dort ein möglicherweise in diesem Bereich vorhandenes Hindernis, insbesondere einen Insassen außerhalb einer Normalposition (out of position; OOP) oder ggf. einen Gegenstand ertastet. Mit dem Tastairbag ist eine Vorrichtung zur Tasterkennung verbunden bzw. darin integriert, die beim Auftreffen des Tastairbags ein wenigstens während der Airbagaufblasphase verwertbares Steuersignal abgibt. Das Auftreten eines solchen Steuersignals bedeutet somit, daß im Aufblasbereich des Airbags, wo sich dieser unbehindert entfalten soll, ein unzulässiges Hindernis als Insasse außerhalb einer Normalposition oder als Gegenstand befindet.

Der Gasgenerator ist hier mit einer mit der Tasterkennung verbundenen Steuereinrichtung für die in den Mehrkammer-Airbag einströmende Gasmenge ausgerüstet. Bei der Beaufschlagung der Steuereinrichtung mit dem vorstehend genannten Steuersignal wird von dieser eine weitere Aufblasfunktion des Gasgenerators für den Mehrkammer-Airbag unterbunden oder wenigstens reduziert.

Durch einen solchen Tastairbag wird unmittelbar der Aufblasbereich eines Airbags abgetastet, wobei von dem relativ kleinvolumigen, mit wenig Energie schnell aufblasbaren Tastairbag praktisch keine oder nur eine geringe, hinnehmbare Aggression ausgeht. Wenn im vorgegebenen Tastbereich kein kritisches Hindernis ertastet wird, erfolgt unmittelbar darauf die Entfaltung der weiteren Airbagkontur mit der Abstützfunktion für den zugeordneten Insassen. Wird dagegen ein kritisches Hindernis im vorgegebenen Abtastbereich ertastet, wird die Aggressivität der Anordnung dadurch unterbunden oder wenigstens stark reduziert, daß die weitere Airbagkontur nicht oder nur reduziert aufgeblasen wird.

Ein solcher Tastairbag oder mehrere, in unterschiedliche Richtungen sich ausbreitende Tastairbags können grundsätzlich für alle Airbaganordnungen, insbesondere für Front-, Seiten- und Kopfairbags zur Ertastung einer freien Airbagentfaltung verwendet werden.

In einer ersten Ausführungsform wird vorgeschlagen, eine separate, völlig getrennte Kammer eines Mehrkammer-Airbags als Tastairbag auszubilden und diesen Tastairbag zeitlich vor wenigstens einer weiteren Airbagkammer mit Abstützfunktion aufzublasen. Einem oder mehreren solcher Tastairbags kann dann jeweils ein Gasgenerator oder eine Stufe eines Mehrstufengenerators zugeordnet werden, für einen schnellen Aufblasvorgang mit wenig Energie und damit wenig Aggressivität.

In einer weiteren alternativen Ausführungsform ist wenigstens ein Tastairbag in einer größeren Airbagkammer integral ausgebildet und durch die Anordnung von Fangbändern formbar. Dazu sind Fangbänder an Wandbereichen um den rückwärtigen Bereich des Tastairbags angeordnet, wodurch dort Teilrandbereiche der Airbagkontur gegen eine Entfaltung zurückgehalten werden und sich vorab nur der Tastairbag mit geringem Volumen aufbläst. Diese Fangbänder sind als kraftbegrenzte Reißbänder ausgestaltet, die nach der Ausbildung des Tastairbags bei einer weiteren Druckerhöhung reißen und damit die gesamte Entfaltung der gesamten Airbagkontur mit Abstützfunktion freigeben. Bei dieser Anordnung ist mit nur geringen zusätzlichen Mitteln und Maßnahmen ein Tastairbag ausbildbar. Beispielsweise wird hierbei ein zentraler Kreis- oder Ringbereich eines insgesamt etwa kugelförmig aufblasbaren Airbags zur Formung eines Tastairbags verwendet.

Die Ausbildung des Tastairbags während der Aufblasphase hinsichtlich der Geometrie und des Zeitablaufs kann vorteilhaft an individuelle und fahrzeugspezifische Gegebenheiten durch die Anordnung und Länge sowie das Reißverhalten der Fangbänder und das Vorsehen von drosselnden Durchströmöffnungen in flexiblen Schottwänden angepaßt und abgestimmt werden.

Vorteilhaft wird die Gaseinströmung in den Mehrkammer-Airbag in allen vorgeschlagenen Ausführungsformen (zumindest außerhalb des Bereichs des Tastairbags) über wenigstens einen Diffusor durchgeführt, der einem Gasgenerator nachgeordnet ist und der radial gerichtete Ausströmungen aufweist. Durch eine damit erreichte, im wesentlichen radiale Einblasrichtung in den Airbag wird dessen Aggressivität gegen einen Insassen verringert. Diese Maßnahme in Kombination mit der Funktion des Tastairbags und ggf. einer Abregelung des wenigstens einen Generators und/oder Nichtzündung einer weiteren Stufe eines Stufengenerators führt zu einer wesentlichen Reduzierung der Aggressivität einer Airbaganordnung.

In einer weiteren alternativen Ausführungsform zur Ausbildung eines Tastairbags wird vorgeschlagen, daß an der Auftreffläche wenigstens einer Hauptkammer eines Airbags etwa in Aufblasrichtung auf einen Insassen zu gerichtet wenigstens ein, bevorzugt mehrere fingerartige Tastairbags ausgeformt sind. Die Geometrie der Anordnung ist dabei so getroffen, daß zu Beginn der Aufblasphase ggf. in Verbindung mit den vorstehend genannten Maßnahmen, mit Schottwänden, Reißbändern, etc. ein oder mehrere Tastairbags aufgeblasen und in den Aufblasbereich der Gesamtkontur hinein bewegt werden. In dieser Ausführungsform geht die Fingerstruktur der Tastairbags im Gegensatz zur vorhergehenden Ausführungsform nicht nach einem Reißen der Fangbänder in eine kugelige Gesamtstruktur über, sondern bleibt grundsätzlich erhalten. Um hier mögliche Aggressivitäten der freien Enden mehrerer solcher Tastairbags weiter zu reduzieren, wird daher vorgeschlagen, diese freien Enden durch eine durchbrochene Folie oder durch ein Netz zu verbinden, so daß die Auftreffbelastung flächig verteilt wird.

In einer weiteren alternativen Ausführungsform zur Ausbildung eines Tastairbags wird eine erste, relativ weit unten in Richtung auf eine Normalposition eines Insassen aufblasbare Airbagkammer als Tastairbag vorgeschlagen. Falls diese ohne auf ein Hindernis aufzutreffen voll aufblasbar ist, soll für eine vollständige Aktivierung und Ausbildung der gesamten Airbagkontur am vorderen Bereich dieser ersten Airbagkammer und durch diese hindurch eine nach oben anschließende Thorax-Airbagkammer aufgeblasen werden. Anschließend kann daran eine weiter angrenzende Kopf-Airbagkammer aufgeblasen werden. Aufgrund dieses Mehrkammersystems können auch hier auf einfache Weise mit den vorstehend bereits geschilderten Maßnahmen die Geometrie der Außenkontur in der Endstellung sowie die zeitliche Abfolge einfach dimensioniert und an individuelle und fahrzeugspezifische Gegebenheiten angepaßt werden.

Bei allen vorstehenden Ausbildungen von Tastairbags ist eine Tasterkennung beim Auftreffen auf ein Hindernis im Aufblasbereich erforderlich.

In einer ersten Ausbildung einer Tasterkennung wird eine Geschwindigkeits- und/oder Beschleunigungsmessung der Ausbreitung des Tastairbags vorgenommen und die Meßergebnisse werden einer Schwellwerteinrichtung zugeführt. Die plötzliche Verringerung eines solchen Meßwerts zeigt das Auftreffen auf ein Hindernis und damit eine erforderliche Abregelung eines Gasgenerators und/oder eine Nichtzündung einer weiteren Stufe eines Stufengenerators.

Grundsätzlich können eine Mehrzahl unterschiedlicher, an sich bekannter Geschwindigkeitsmeßvorrichtungen eingesetzt werden. Eine besonders einfache und funktionsfähige Vorrichtung zur Geschwindigkeitsmessung besteht aus einer Meßschnur mit einem aufgebrachten Barcode und einer Lichtschranke mit einer Signalauswertung. Die Meßschnur ist am inneren vorderen Ende des jeweiligen Tastairbags befestigt und wird mit dessen Ausbreitung durch die Lichtschranke und eine dort angebrachte, die Meßschnur straffende Schnurbremse gezogen. Der durch die Lichtschranke gezogene Barcode ist meßtechnisch erfaßbar und ergibt die Durchzugsgeschwindigkeit. Zudem kann darüber ggf. auch eine Endstellung des Tastairbags ermittelt werden, nach der ein Auftreffen nicht mehr zu einer Abregelung eines Gasgenerators führen soll.

Alternativ oder auch zusätzlich zu der vorstehenden Geschwindigkeitserfassungseinrichtung kann zur Tasterkennung auch die Stellung von Schaltkontakten herangezogen werden, die in einem vorderen Tastbereich des Tastairbags angeordnet sind. Solche Schaltkontakte können durch eine Verformung des Tastairbags beim Auftreffen auf ein Hindernis je nach ihrer Ausgangsstellung geöffnet oder geschlossen werden. Vorzugsweise wird dadurch ein Schaltkreis zur Abgabe eines Steuersignals geschlossen. Die Anordnung kann vorteilhaft auch so getroffen sein, daß die Kontakte bei der vollen Entfaltung des Airbags so weit auseinanderstehen, daß keine Kontaktgabe zum Schließen eines Schaltkreises mehr möglich ist.

Zur Abregelung eines oder mehrerer Gasgeneratoren kann wenigstens ein mehrstufig steuerbarer Mehrstufengenerator vorgesehen werden, wobei zum Aufblasen des Tastairbags eine erste Stufe gezündet wird. Beim Ansprechen der Tasterkennung kann dann über einen geeigneten Algorithmus der Steuereinrichtung entschieden werden, ob keine oder ggf. eine reduzierte Anzahl weiterer Stufen gezündet werden. Ein Stufengenerator kann auch aus einem nichtabregelbaren und einem regelbaren Generator als 2. Stufe und umgekehrt bestehen.

Alternativ oder zusätzlich dazu kann beim Auftreffen eines Tasterkennungssignals auch direkt ein Eingriff an einem bereits gezündeten Gasgenerator dadurch erfolgen, daß vorzugsweise über eine pyrotechnisch betätigbare Schieberblende eine Gaseintrittsöffnung zum Airbag abgesperrt und zugleich ein Bypaß geöffnet wird.

Anhand einer Zeichnung wird die Erfindung näher erläutert.

Es zeigen:
- Fig. 1: eine schematische Schnittdarstellung einer ersten Ausführungsform eines Mehrkammer-Airbags mit einem fingerartigen Tastairbag und einer Tasterkennung durch eine Meßschnur,
- Fig.2: eine schematische Schnittdarstellung einer zweiten Ausführungsform eines Mehrkammer-Airbags mit im Bereich eines Tastairbags angeordneten Schaltkontakten zur Tasterkennung,
- Fig. 3: eine schematische Schnittdarstellung einer dritten Ausführungsform eines Mehrkammer-Airbags mit mehreren Tastairbags,
- Fig. 4: eine schematische Schnittdarstellung einer vierten Ausführungsform eines Mehrkammer-Airbags mit drei aufblasbaren fingerartigen Tastairbags, und
- Fig. 5: eine schematische Schnittdarstellung einer fünften Ausführungsform eines Mehrkammer-Airbags mit einer Thorax-Airbagkammer und einer Kopf-Airbagkammer.

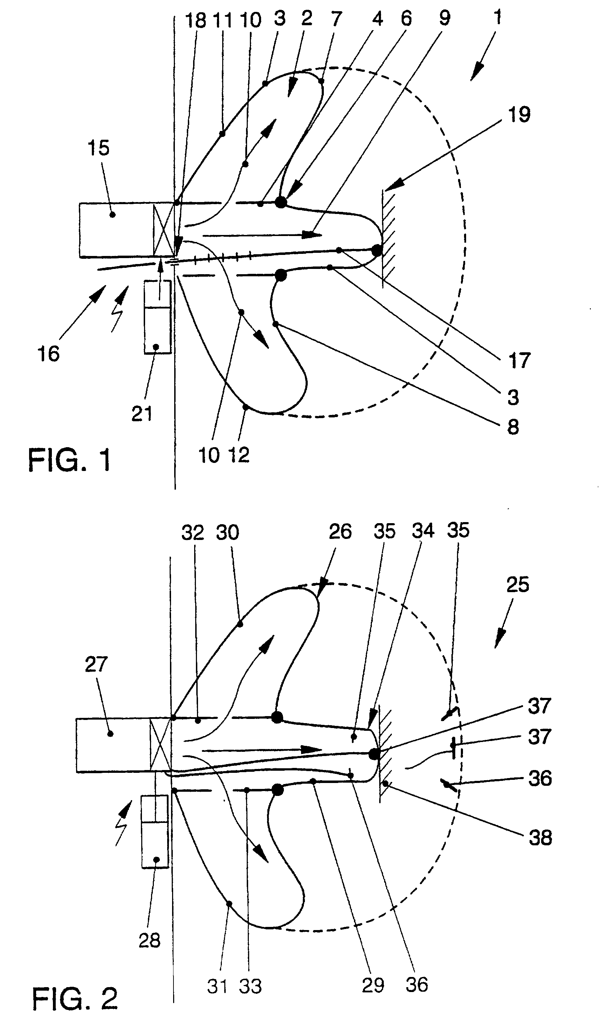

In der Fig. 1 ist eine Sicherheitsvorrichtung 1 für ein Kraftfahrzeug mit einem Mehrkammer-Airbag 2, der bei einem Fahrzeugaufprall aktivierbar ist, schematisch dargestellt. Dieser Mehrkammer-Airbag 2 ist so ausgebildet, daß sich zu Beginn der Airbagaktivierung ein fingerartiger Tastairbag 3 mit Tastfunktion mit wenig Energie schnell aufbläst.

Die Ausbildung des Tastairbags 3 wird durch Fangbänder 4, 5 erreicht, die einerseits fahrzeugfest und andererseits an einem in Aufblasrichtung weisenden Kreis- oder Ringbereich 6 des Tastairbags 3 angebracht sind. Dadurch werden Teilwandbereiche 7, 8 zu Anfang des Aufbtasvorgangs am Entfalten gehindert und der Tastairbag 3 ausgebildet.

Dabei wird, wie dies aus der Fig. 1 ersichtlich ist, der Tastairbag 3 durch einen axialen Gasstrom 9 und eine Ringkammer (seitlicher Airbagkammerteil 11 und seitlicher Airbagkammerteil 12) des Mehrkammer-Airbags 2 durch einen radialen Gasstrom 10 aufgeblasen. Die Verteilung dieser Gasströme 9, 10 in axiale und radiale Richtung erfolgt dabei durch einen Diffusor, der einem einstufigen Gasgenerator 15 nachgeschaltet ist. Der Hauptgasstrom ist vorzugsweise in radiale Richtung gerichtet, so daß der Tastairbag 3 mit wenig Energie wenig aggressiv jedoch wegen seines relativ kleinen Volumens schnell aufgeblasen wird.

Mit dem Tastairbag 3 ist weiterhin eine Tasterkennungsvorrichtung 16 verbunden, die eine Meßschnur 17 mit einem aufgebrachten Barcode, eine der Meßschnur 17 zugeordnete ortsfeste Lichtschranke 18 sowie eine in der Fig. 1 nicht dargestellte Signalauswertung mit Schwellwerteinrichtung umfaßt. Die Meßschnur 17 ist an einem vorderen, inneren Ende des Tastairbags 3 befestigt und wird bei der Ausbreitung des Tastairbags 3 durch die ortsfest angebrachten Lichtschranke 18 gezogen. Die Durchzugsgeschwindigkeit der Meßschnur 17 wird dabei von der Lichtschranke 18 über den vorbeiziehenden Barcode optisch erfaßt und gemessen, wobei zur Sicherstellung einer bestimmten, relativ geringen Schnurspannung im Bereich der Lichtschranke 18 eine in der Fig. 1 nicht dargestellte Schnurbremse angebracht ist.

Trifft der Tastairbag 3 im Falle eines Fahrzeugaufpralls auf einen sich in einer out of Position-Stellung befindlichen Fahrzeuginsassen als Hindernis 19, wird die Ausbreitungsgeschwindigkeit des Tastairbags 3 und damit der Meßschnur 17 plötzlich stark reduziert. Diese Reduzierung der Ausbreitungsgeschwindigkeit der Meßschnur 17 wird über die Lichtschranke 18 von der Signalauswertung erfaßt, die beim Unterschreiten eines vorgegebenen Geschwindigkeits- und/oder Beschleunigungssollwerts ein Steuersignal an ein pyrotechnisches Element 21 abgibt. Dieses Steuersignal bewirkt, daß das pyrotechnische Element 21 eine angeschlossene Schieberblende aktiviert, die die Gaseintrittsöffnung vom Gasgenerator 15 in den Mehrkammer-Airbag 2 absperrt und dadurch das weitere Aufblasen des Mehrkammer-Airbags 2 unterbindet. Gleichzeitig mit dem Vorschieben der Schieberblende wird ein Bypaß geöffnet, um das Abströmen des Gases vom bereits gezündeten Gasgenerator zu ermöglichen. Dadurch werden Beeinträchtigungen eines sich in einer out of position-Stellung befindlichen Fahrzeuginsassen vermieden, da das Aufblasen des Mehrkammer-Airbags 2 in seine in der Fig. 1 strichliert eingezeichnete Endposition nicht mehr erfolgt

Damit sich der Mehrkammer-Airbag 2, wenn sich kein Hindernis im Aufblasbereich befindet, in seine strichliert eingezeichnete kugelförmige Endlage aufblasen kann, weisen die Fangbänder 4, 5 eine kraftbegrenzte Sollbruchstelle auf, die nach der Ausbildung des Tastairbags 3 bei einer weiteren Druckerhöhung durch einströmendes Gas reißen und damit die Entfaltung der gesamten Airbagkammer freigeben. Die Fangbänder 4, 5 sind als flexible Schotlwände mit Durchströmöffnungen ausgebildet und weisen dadurch vor dem Reißen eine Drosselwirkung zwischen dem direkt zur schnellen Ausbildung in den Tastairbag 3 einströmenden Gas und den angrenzenden seitlichen Airbagkammerteilen 11, 12 auf.

In der Fig. 2 ist eine zweite Ausführungsform einer Sicherheitsvorrichtung 25 für ein Kraftfahrzeug mit einem Mehrkammer-Airbag 26 schematisch dargestellt. Diese Sicherheitsvorrichtung 25 weist grundsätzlich den gleichen Aufbau wie die Sicherheitsvorrichtung 1 der Fig. 1 auf. Der durch einen Gasgenerator 27 aktivierbare Mehrkammer-Airbag 26 bildet zu Beginn der Airbagaktivierung durch die Anordnung von Fangbändem 32, 33 in analoger Weise zur Ausführungsform der Fig. 1 einen Tastairbag 29 und eine Ringkammer mit einem dargestellten Airbagkammerteil 30 und einem Airbagkammerteil 31 aus.

Weiter umfaßt diese Sicherheitsvorrichtung 25 eine Tasterkennungsvorrichtung 34, die aus Schaltkontakten 35, 36, 37 besteht, von denen der Schaltkontakt 37 an einem vorderen inneren Ende des Tastairbags 29 angeordnet ist und die beiden anderen Schaltkontakte 35, 36 einander gegenüberliegend an endseitigen Seitenbereichen des Tastairbags 29 angeordnet sind. Die Schaltkontakte 35, 36 können auch Teile eines Kontaktrings sein. Trifft der Tastairbag 29 auf einen Fahrzeuginsassen als Hindernis 38 in einer out of position-Stellung verändern die Schaltkontakte 35, 36, 37 ihre Relativstellung zueinander und der Schaltkontakt 37 gelangt in Kontakt mit den Schaltkontakten 35 und 36, wodurch ein Schattkreis geschlossen wird. Dadurch wird ein Steuersignal an eine Steuereinrichtung abgegeben, die ein pyrotechnisches Element 28 ansteuert Dieses pyrotechnische Element 28 aktiviert dann entsprechend zur Ausführungsform der Fig. 1 eine Schieberblende, die eine Gaseintrittsöffnung in den Mehrkammer-Airbag 26 absperrt, wobei gleichzeitig ein Bypaß zur Gasabströmung geöffnet wird. Als Schaltkontakte können auch ein Schaltdraht oder eine Schaltfolie verwendet werden, die beim Auftreffen auf ein Hindernis für eine Kontaktgabe reißen oder ggf. schließen.

Auch hier reißen die Fangbänder 32, 33 bei einer weiteren Druckerhöhung durch einströmendes Gas und geben damit die Entfaltung der gesamten Airbagkammer frei. In der in der Fig. 2 strichliert eingezeichneten Endstellung des Mehrkammer-Airbags 26, stehen die Schaltkontakte 35, 36, 37 so weit auseinander, daß kein Kontakt zum Schließen eines Schaltkreises und damit in richtiger Funktion keine Abregelung des Generators 27 mehr möglich ist.

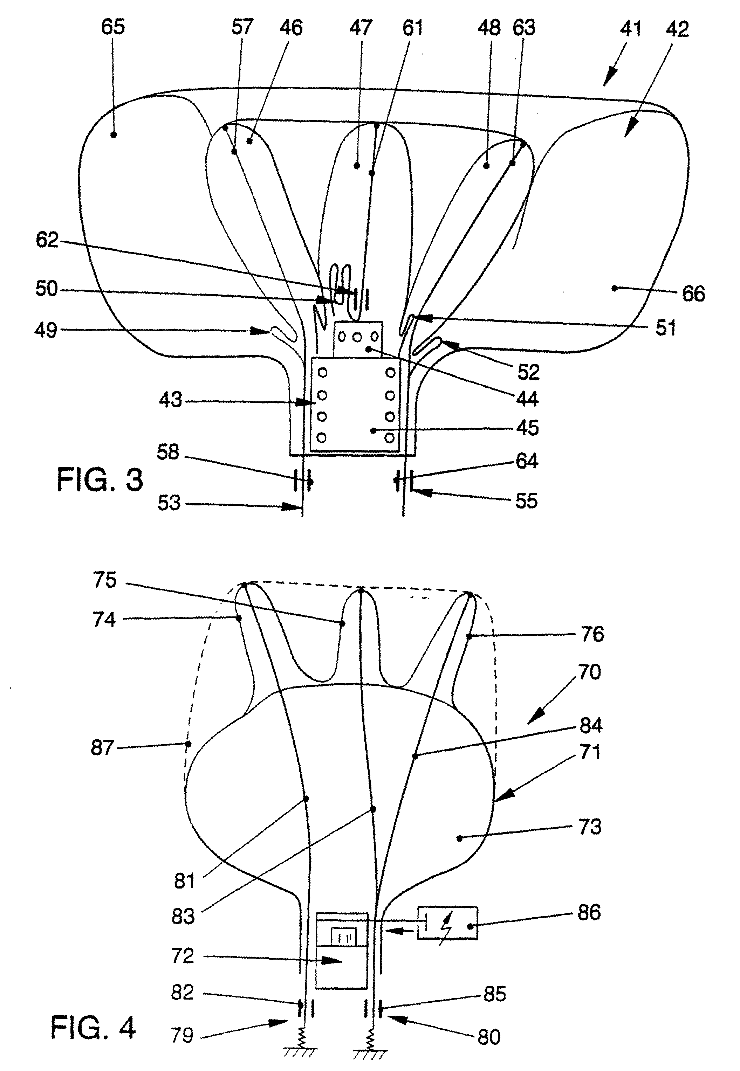

In der Fig. 3 ist eine dritte Ausführungsform einer Sicherheitsvorrichtung 41 für einen Mehrkammer-Airbag 42 schematisch dargestellt. Diese Sicherheitsvorrichtung 41 umfaßt einen Mehrstufengenerator 43, der eine erste Gasgeneratorstufe 44 und eine zweite Gasgeneratorstufe 45 aufweist.

Zu Beginn eines Aufblasvorgangs des Mehrkammer-Airbags 42 bei einem Fahrzeugaufprall wird nach dem Öffnen einer hier nicht dargestellten Airbagabdeckung die erste Gasgeneratorstufe 44 gezündet, wodurch die fingerartigen Tastairbags 46, 47, 48 mit relativ geringer Energie und relativ kleinem Volumen aufgeblasen werden. Die fingerartige Ausbildung der Tastairbags 46, 47, 48 kann auch hier entsprechend den Ausführungsformen aus Fig. 1 und Fig. 2 durch im Bereich des Mehrstufengenerators 43 angeordnete Fangbänder 49, 50, 51, 52 in Verbindung mit Wandfaltungen erreicht werden, wodurch Teile der Airbagwandungen vorerst zurückgehalten werden.

Die Tastairbags 46 und 48 weisen je in eine seitliche Richtung, so daß auch dort ggf. befindliche Insassen und Gegenstände in out of Position-Stellungen erfaßt werden. Die freien Enden der Tastairbags 46, 47, 48 können, wie dargestellt, durch eine Folie oder ein Netz verbunden sein. Die dargestellten Tastairbags 46, 48 können auch Teile einer kreisförmigen Ringkammer sein.

Jedem dieser Tastairbags 46, 47, 48 ist jeweils eine Tasterkennungsvorrichtung 53, 54, 55 zugeordnet. Die Tasterkennungsvorrichtung 53 des Tastairbags 46 umfaßt eine Meßschnur 57 mit einem aufgebrachten Barcode, eine dieser Meßschnur 57 zugeordnete, ortsfeste Lichtschranke 58 sowie eine hier nicht dargestellte Signalauswertung mit Schwellwerteinrichtung. Die Meßschnur 57 ist an einem vorderen, inneren Ende des Tastairbags 46 befestigt und wird bei der Ausbreitung des Tastairbags 46 an der ortsfest angebrachten Lichtschranke 58 vorbeigezogen. Entsprechend sind die Tasterkennungsvorrichtung 54 des Tastairbags 47 mit einer Meßschnur 61 und einer ortsfesten Lichtschranke 62 sowie die Tasterkennungsvorrichtung 55 des Tastairbags 48 mit einer Meßschnur 63 und einer ortsfesten Lichtschranke 64 aufgebaut.

Während des Aufblasvorgangs der Tastairbags 46, 47 und 48 wird deren Meßschnur 57, 61, 63 durch eine im Bereich der Lichtschranken 58, 62, 64 angebrachte Scnnurbremse unter relativ geringer Schnurspannung gespannt, so daß die Durchzuggeschwindigkeit über den vorbeiziehenden Barcode optisch erfaßbar und meßbar ist. Fallen die Auszugsgeschwindigkeiten der Meßschnüre 57, 61, 63 z. B. beim Auftreffen eines oder mehrerer der Tastairbags 46, 47, 48 auf einen sich in einer out of position-Stellung befindlichen Fahrzeuginsassen ab, so wird über die jeweilige zugeordnete Schweliwerteinrichtung der Signalauswertung beim Unterschreiten eines vorgegebenen Geschwindigkeits- und/oder Beschleunigungssollwerts ein Steuersignal an eine Gasgeneratorsteuereinrichtung abgegeben. Die Gasgeneratorsteuereinrichtung steuert dann die zweite Gasgeneratorstufe 45 nicht mehr an, so daß ein weiteres Aufblasen des Mehrkammer-Airbags 42 unterbleibt.

Die Tastairbags 46, 47, 48 haben eine hohe Ausbreitungsgeschwindigkeit mit verhältnismäßig geringer Energie. Dadurch werden z. B. Insassen oder Kindersitze mit relativ geringer Belastung auch in schräger Richtung von den Tastairbags 46, 47, 48, d. h. in out of position-Stellungen erkannt.

Für den Fall, daß sich Fahrzeuginsassen nicht in einer out of position-Stellung befinden, fällt die Auszugsgeschwindigkeit der Meßschnüre 57, 61, 63 erst bei Erreichen der Sollbruchstelle der Fangbänder 49, 50, 51, 52 ab. Das dann an die Gasgeneratorsteuereinrichtung abgegebene Steuersignal bewirkt die Zündung des zweiten Gasgenerators 45, der dann die Airbagkammem 65, 66 sowie die Tastairbags 46, 47, 48 weiter aufbläst, wodurch dann die Fangbänder 49, 50, 51, 52 zerreißen und der Mehrkammer-Airbag 42 seine Endlage einnehmen kann.

Die in der Fig. 3 dargestellte Sicherheitsvorrichtung 41 ist grundsätzlich auch mit einem einstufigen Gasgenerator und einem geeignet ausgebildeten Diffusor betreibbar, was hier allerdings nicht dargestellt ist. Bei einem solchen einstufigen Gasgenerator würde dann entsprechend der Ausführungsformen der Fg. 1 und 2 bei plötzlicher Abnahme der Auszugsgeschwindigkeit der Meßschnüre 57, 61, 63 das weitere Aufblasen des Mehrkammer-Airbags 42 mittels eines pyrotechnischen Elements abgeregelt werden. Z. B. könnten hier dann mittels Schieberblenden die Gaseintrittsöffnungen in den Mehrkammer-Airbag 42 geschlossen und gleichzeitig Bypässe zur Gasabströmung geöffnet werden.

In der Fig. 4 ist eine weitere Ausführungsform einer Sichemeitsvordchtung 70 mit einem Mehrkammer-Airbag 71 schematisch dargestellt. Diese Sicherheitsvorrichtung 70 umfaßt einen einstufigen Gasgenerator 72, mittels dem der Mehrkammer-Airbag 71 aufblasbar ist Wie dies der Fig. 4 zu entnehmen ist, werden zu Beginn des Aufblasvorgangs bei einer Aktivierung des Mehrkammer-Airbags 71 an einer Auftreffläche einer Hauptkammer 73 etwa in Aufblasrichtung gerichtet drei fingerartige Tagstairbags 74, 75, 76 ausgeformt, die durch die entsprechende Airbag-Geometrie bedingt zu Beginn der Aufblasphase zusammen aufgeblasen werden.

Die Sicherheitsvorrichtung 70 umfaßt eine erste Tasterkennungsvorrichtung 79 für den Tastairbag 74, mit einer Meßschnur 81 mit einem aufgebrachten Barcode und mit einer dieser Meßschnur 81 zugeordneten ortsfesten Lichtschranke mit Signalauswertung. Weiter umfaßt die Sicherheitsvorrichtung 70 eine zweite Tasterkennungsvorrichtung 80 für die Tastairbags 75 und 76, die eine erste Meßschnur 83 für den Tastairbag 75 und eine zweite Meßschnur 84 für den Tastairbag 76 umfaßt. Diesen Meßschnüren 83, 84 ist eine ortsfeste Lichtschranke 85 mit einer Signalauswertung zugeordnet. Auch hier ist wieder im Bereich der Lichtschranke eine Schnurbremse für eine relativ geringe Schnurspannung angebracht, damit der Barcode der Meßschnüre 81, 83, 84 beim Vorbeiziehen an der Lichtschranke 82, 85 optisch gut erfaßbar und meßbar ist.

Die Tastairbags 74, 75, 76 tasten das Vorfeld der Hauptkammer 73 mit relativ geringer Energie ab und geben über ihre Meßschnüre 81, 83, 84 beim Auftreffen auf einen Fahrzeuginsassen in einer out of position-Stellung durch plötzliche Reduktion der Auszugsgeschwindigkeit über die den Lichtschranken 82, 85 zugeordnete Signalauswertung ein Signal an ein pyrotechnisches Element 86. Dieses pyrotechnische Element 86 stoppt mittels einer vor die Gaseintriffsöffnung schiebbaren Schieberblende die weitere Gaszufuhr in den Mehrkammer-Airbag 71, wodurch die Aggressivität des Mehrkammer-Airbags 71 für einen Fahrzeuginsassen in einer out of position-Stellung erheblich reduziert wird.

Wie dies in der Fig. 4 strichliert eingezeichnet ist, sind die freien Enden der Tastairbags 74, 75, 76 mittels eines Netzes 87 oder einer durchbrochenen Folie verbunden, um die lokale Fingeraggressivität zu reduzieren.

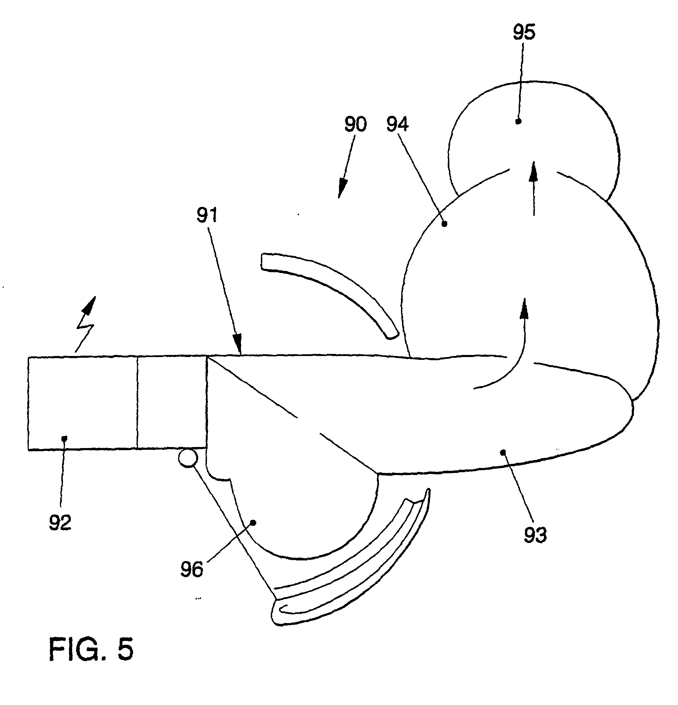

In der Fig. 5 ist eine weitere Ausführungsform einer Sicherheitsvorrichtung 90 mit einem Mehrkammer-Airbag 91 als 4-Kammer-Airbag schematisch dargestellt Bei dieser Sicherheitsvorrichtung 90, die einen ein- oder mehrstufigen Gasgenerator 92 aufweist, wird im Falle eines Fahrzeugaufpralls zuerst eine erste Airbaggaskammer 96 zum Öffnen der Klappe und eine zweite Airbagkammer als Tastairbag 93 akfiviert, der in einem unteren Bereich in Richtung auf eine Normalposition eines Insassen aufgeblasen wird. Befindet sich ein Fahrzeuginsasse in einer out of position-Stellung innerhalb des Kraftfahrzeugs, kann analog zu den vorher beschriebenen Ausführungsformen der Fig. 1 bis 4 die Gaszufuhr und damit ein aggressives vollständiges Aufblasen des Mehrkammer-Airbags 91 mittels einer Abregelung des Gasgenerators 92 oder einer Aktivierung eines pyrotechnischen Elements gestoppt werden.

Befindet sich der Fahrzeuginsasse in einer Normalposition innerhalb des Fahrzeugs, d.h. in keiner out of position-Stellung und wird kein weiteres Hindernis erfaßt, kann der Mehrkammer-Airbag 91 vollständig aufgeblasen werden. Dazu wird zuerst eine weitere, sich am vorderen Bereich des Tastairbags 93 nach oben anschließende Thorax-Airbagkammer 94 durch den Tastairbag 93 hindurch aufgeblasen und anschließend durch den Tastairbag 93 sowie die Thorax-Airbagkammer 94 hindurch eine sich an die Thorax-Airbagkammer 94 anschließende Kopf-Airbagkammer 95 aufgeblasen.

## Patentansprüche

1. Sicherheitsvorrichtung für ein Kraftfahrzeug mit
- einem Mehrkammer-Airbag, der über wenigstens einen bei einem Fahrzeugaufprall aktivierbaren Gasgenerator (15; 27; 43; 72; 92) aufblasbar ist,
- einer Vorrichtung zur Tasterkennung (16; 34; 53, 54, 55; 79, 80), die mit dem Mehrkammer-Airbag verbunden ist und bei dessen Auftreffen auf ein möglicherweise vorhandenes Hindernis (19,38), insbesondere einen Insassen ausserhalb einer Normalposition, ein wenigstens während der Airbag-Aufbfasphase verwertbares Steuersignal abgibt,
- einer Steuereinrichtung für die in den Mehrkammer-Airbag (2; 26; 42; 71; 91) einströmende Gasmenge , wobei die Steuereinrichtung dem Gasgenerator (15; 27; 43; 72; 92) zugeordnet ist und mit der Vorrichtung zur Tasterkennung (16; 34; 53, 54, 55; 79, 80) verbunden ist und bei der Beaufschlagung mit einem Steuersignal eine weitere Aufblasfunktion des Gasgenerators (15; 27; 43; 72; 92) für den Mehrkammer-Airbag (2; 26; 42; 71; 91) unterbindet oder wenigstens reduziert,
**dadurch gekennzeichnet, daß**
der Mehrkammer-Airbag (2; 26; 42; 71; 91) wenigstens einen relativ kleinvolumigen, fingerartig mit wenig Energie schnell aufblasbaren Tastairbag (3; 29; 46, 47, 48; 74, 75, 76; 93) mit Tastfunktion aufweist, welcher in den Aufblasbereich wenigstens einer weiteren, großvolumigeren Airbagkammer (11, 12; 30, 31; 65, 66; 73; 94, 95) mit Abstützfunktion aufblasbar und/oder bewegbar ist und dort das möglicherweise in diesem Bereich vorhandene Hindernis (19; 38), insbesondere den Insassen außerhalb einer Normalposition, ertastet.

2. Sicherheitsvorrichtung für ein Kraftfahrzeug mit einem Mehrkammer-Airbag nach Anspruch 1, **dadurch gekennzeichnet, daß** der wenigstens eine Tastairbag (93) eine separate Kammer eines Mehrkammer-Airbags ist, die zeitlich vor wenigstens einer weiteren Airbagkammer mit Abstützfunktion aufblasbar ist.

3. Sicherheitsvorrichtung für ein Kraftfahrzeug mit einem Mehrkammer-Airbag nach Anspruch 1, **dadurch gekennzeichnet,**
**daß** wenigstens ein Tastairbag (3; 29; 46, 47, 48) an einer größeren Airbagkammer (11, 12; 30, 31; 65, 66) durch Fangbänder (4, 5; 32, 33; 49, 50, 51, 52) ausbildbar ist, wobei die Fangbänder (4, 5; 32, 33; 49, 50, 51, 52) an Wandbereichen um den rückwärtigen Bereich des Tastairbags (3; 29; 46, 47, 48) angeordnet sind und dort zumindest Teilwandbereiche gegen eine Entfaltung beim Aufblasvorgang zurückhalten, so daß sich vorab der Tastairbag (3; 29; 46, 47, 48) aufbläst, und
**daß** die Fangbänder (4, 5; 32, 33; 49, 50, 51, 52) wenigstens eine kraftbegrenzte Sollbruchstelle aufweisen und nach der Ausbildung des Tastairbags (3; 29; 46, 47, 48) bei weiterer Druckerhöhung reißen und damit die Entfaltung der gesamten Airbagkammer freigeben.

4. Sicherheitsvorrichtung für ein Kraftfahrzeug mit einem Mehrkammer-Airbag nach Anspruch 3, **dadurch gekennzeichnet,**
**daß** bei einem in seiner Endlage etwa kugelförmig aufblasbaren Airbag (2; 26; 42) die Fangbänder (4, 5; 32, 33; 49, 50, 51, 52) an wenigstens einem in Aufblasrichtung weisenden Kreis- oder Ringbereich (6) angebracht sind, wodurch die Wand innerhalb des Kreis- oder Ringbereichs (6) zu einem Tastairbag (3; 29; 46, 47, 48) aufblasbar ist, und
**daß** die an den Kreis- oder Ringbereich (6) angrenzenden Wandbereiche bereits während der Ausbildung des Tastairbags (3; 29; 46, 47, 48) zu einem Airbagring aufblasbar sind.

5. Sicherheitsvorrichtung für ein Kraftfahrzeug mit einem Mehrkammer-Airbag nach Anspruch 3 oder Anspruch 4, **dadurch gekennzeichnet, daß** die Fangbänder (4, 5; 32, 33; 49, 50, 51, 52) als flexible Schottwände mit Durchströmöffnungen ausgebildet sind und dadurch vor dem Reißen eine Drosselwirkung zwischen dem direkt in den Tastairbag (3; 29; 46, 47, 48) einströmenden Gas und angrenzenden Airbagkammerteilen (11, 12; 30, 31; 65, 66) aufweisen.

6. Sicherheitsvorrichtung für ein Kraftfahrzeug mit einem Mehrkammer-Airbag nach einem der Ansprüche 1 bis 5, **dadurch gekennzeichnet, daß** die Gaseinströmung in den Mehrkammer-Airbag (2; 26) zumindest außerhalb des Bereichs des Tastairbags (3; 29) über einen Diffusor im wesentlichen radial erfolgt.

7. Sicherheitsvorrichtung für ein Kraftfahrzeug mit einem Mehrkammer-Airbag nach Anspruch 1, **dadurch gekennzeichnet, daß** an der Auftreffläche wenigstens einer Hauptkammer (73) eines Airbags (71) etwa in Aufblasrichtung gerichtet wenigstens ein, bevorzugt mehrere fingerartige Tastairbags (74, 75, 76) ausgeformt sind, die zusammen und durch entsprechende Geometrie im wesentlichen zu Beginn der Aufblasphase aufgeblasen werden.

8. Sicherheitsvorrichtung für ein Kraftfahrzeug mit einem Mehrkammer-Airbag nach Anspruch 7, **dadurch gekennzeichnet, daß** freie Enden mehrerer Tastairbags (74, 75, 76) durch eine durchbrochene Folie oder durch ein Netz (87) verbunden sind.

9. Sicherheitsvorrichtung für ein Kraftfahrzeug mit einem Mehrkammer-Airbag nach Anspruch 1, **dadurch gekennzeichnet, daß** als Tastairbag eine Airbagkammer (93) relativ weit unten in Richtung auf eine Normalposition eines Insassen aufgeblasen wird und für eine vollständige Aktivierung eine weitere, am vorderen Bereich des Tastairbags (93) nach oben anschließende Thorax-Airbagkammer (94) durch die den Tastairbag (93) hindurch und anschließend an die Thorax-Airbagkammer (94) eine Kopf-Airbagkammer (95) aufgeblasen wird.

10. Sicherheitsvorichtung für ein Kraftfahrzeug mit einem Mehrkammer-Airbag nach einem der Ansprüche 1 bis 9, **dadurch gekennzeichnet, daß** die Vorrichtung zur Tasterkennung (16; 34; 53, 54, 55; 79, 80) beim Auftreffen des Tastairbags (3; 29; 46, 47, 48; 74, 75, 76; 93) auf ein nicht in Normalposition befindlichen Hindernis aus einer Geschwindigkeits- und/oder Beschleunigungsmeßvorrichtung für die Ausbreitung des Tastairbags (3; 29; 46, 47, 48; 74, 75, 76; 93) in Verbindung mit einer nachgeschalteten Schwellwerteinrichtung besteht, wobei die Schwellwerteinrichtung beim Unterschreiten eines vorgegebenen Geschwindigkeits- und/oder Beschleunigungssollwerts das Steuersignal für die Gasgeneratorsteuereinrichtung abgibt.

11. Sicherheitsvorrichtung für ein Kraftfahrzeug mit einem Mehrkammer-Airbag nach Anspruch 10, **dadurch gekennzeichnet,**
**daß** die Geschwindigkeitsmeßvorrichtung aus einer Meßschnur (17; 57, 61, 63; 81, 83) bevorzugt mit einem aufgebrachten Barcode und einer zugeordneten Lichtschranke (18; 58, 62, 64; 82, 85) mit Signalsauswertung besteht, wobei die Meßschnur (17; 57, 61, 63; 81, 83) mit einem Ende am vorderen inneren Ende des jeweiligen Tastairbags (3; 46, 47, 48; 74, 75, 76; 93) befestigt ist und mit der Ausbreitung des Airbags (2; 42; 71; 91) im gespannten Zustand mitgezogen wird, und
**daß** die Lichtschranke (18; 58, 62, 64; 82, 85) ortsfest angebracht ist und durch diese die Meßschnur (17; 57, 61, 63; 81, 83) entsprechend gezogen wird, wobei die Durchzuggeschwindigkeit bevorzugt über den vorbeiziehenden Barcode optisch erfaßbar und meßbar ist, wobei zur Sicherstellung einer bestimmten, relativ geringen Schnurspannung im Bereich der Lichtschranke (18; 58, 62, 64; 82, 85) eine Schnurbremse angebracht ist.

12. Sicherheitsvorrichtung für ein Kraftfahrzeug mit einem Mehrkammer-Airbag nach einem der Ansprüche 1 bis 11, **dadurch gekennzeichnet, daß** die Vorrichtung zur Tasterkennung (34) aus Schaltkontakten (35, 36, 37) im vorderen Bereich des Tastairbags (29) besteht, die beim Auftreffen des Tastairbags (29) auf ein Hindernis (38) ihre Relativstellung ändern und als Steuersignal einen Schaltkreis öffnen oder bevorzugt schließen.

13. Sicherheitsvorrichtung für ein Kraftfahrzeug mit einem Mehrkammer-Airbag nach Anspruch 12, **dadurch gekennzeichnet, daß** die Schaltkontakte (35, 36, 37) in der Endstellung des Airbags (26) soweit auseinander stehen, daß keine Kontaktgabe zum Schließen eines Schaltkreises mehr möglich ist.

14. Sicherheitsvorrichtung für ein Kraftfahrzeug mit einem Mehrkammer-Airbag nach einem der Ansprüche 1 bis 13, **dadurch gekennzeichnet,**
**daß** der Gasgenerator (43) ein durch die Steuereinrichtung steuerbarer Mehrstufengenerator ist,
**daß** zum Aufblasen des Tastairbags (46, 47, 48) eine erste Stufe (44) gezündet wird, und
**daß** beim Ansprechen der Tasterkennung (53, 54, 55) unter Abgabe eines Steuersignals die Zündung weiterer Stufen (45) durch die Steuereinrichtung unterbleibt.

15. Sicherheitsvorrichtung für ein Kraftfahrzeug mit einem Mehrkammer-Airbag nach einem der Ansprüche 1 bis 14, **dadurch gekennzeichnet, daß** insbesondere bei der Verwendung eines Gasgenerators (15; 27; 72; 92) mit nur einer Stufe beim Ansprechen der Tasterkennung (16; 34; 79, 80) unter Abgabe eines Steuersignals der Gasgenerator (15; 27; 72; 92) von der Steuereinrichtung hinsichtlich der in den Mehrkammer-Airbag (2; 26; 71, 91) einströmenden Gasmenge abgeriegelt wird.

16. Sicherheitsvorrichtung für ein Kraftfahrzeug mit einem Mehrkammer-Airbag nach Anspruch 15, **dadurch gekennzeichnet, daß** die Steuereinrichtung ein durch das Steuersignal aktivierbares, pyrotechnisches Element (21; 28; 86) mit angeschlossener Schieberblende umfaßt, mit der die Gaseintrittsöffnung in den Airbag (2; 26; 71; 91) absperrbar und zugleich ein Bypaß offenbar ist.

## Claims

1. Safety device for a motor vehicle, having
- a multi-chamber airbag which can be inflated by means of at least one gas generator (15; 27; 43; 72; 92) which can be activated on a vehicle if an impact occurs,
- a touch detection device (16; 34,; 53, 54, 55; 79, 80) which is connected to the multi-chamber airbag and which, when it strikes an obstacle possibly present (19, 38), in particular a vehicle occupant outside a normal position, outputs a control signal which can be utilized at least during the airbag inflation phase,
- a control device for the quantity of gas flowing into the multi-chamber airbag (2; 26; 42; 71; 91), the control device being assigned to the gas generator (15; 27; 43; 72; 92) and being connected to the touch detection device (16; 34; 53, 54, 55; 79, 80) and prevents or at least reduces a further inflation function of the gas generator (15; 27; 43; 72; 92) for the multi-chamber airbag (2; 26; 42; 71; 91) when a control signal is applied to it,
**characterized in that** the multichamber airbag (2; 26; 42; 71; 91) has at least one relatively small-volume, finger-like sensing airbag (3; 29; 46, 47, 48; 74, 75, 76; 93) which can be inflated quickly and with little energy and has a sensing function, which sensing airbag (3; 29; 46, 47, 48; 74, 75, 76; 93) can be inflated and/or moved into the inflation region of at least one further larger-volume airbag chamber (11, 12; 30, 31; 65, 66; 73; 94, 95) with support function and senses there the obstacle (19; 38) which is possibly present in this region, in particular the vehicle occupant outside a normal position.

2. Safety device for a motor vehicle having a multi-chamber airbag according to Claim 1, **characterized in that** at least one sensing airbag (93) is a separate chamber of a multi-chamber airbag, which chamber can be inflated before at least one further airbag chamber with a support function.

3. Safety device for a motor vehicle having a multi-chamber airbag according to Claim 1, **characterized in that** at least one sensing airbag (3; 29; 46, 47, 48) can be formed on a relatively large airbag chamber (11, 12; 30, 31; 65, 66) by means of retaining straps (4, 5; 32, 33; 49, 50, 51, 52), the retaining straps (4, 5; 32, 33; 49, 50, 51, 52) being arranged on wall regions around the rear region of the sensing airbag (3; 29; 46, 47, 48) and retaining there at least regions of the wall against unfolding during the inflation process so that the sensing airbag (3; 29; 46, 47, 48) inflates in advance, and **in that** the retaining straps (4, 5; 32, 33; 49, 50, 51, 52) have at least one force-limited predetermined break point, and tear as the pressure increases further after the formation of the sensing airbag (3; 29; 46, 47, 48), and thus enable the unfolding of the entire airbag chamber.

4. Safety device for a motor vehicle having a multi-chamber airbag according to Claim 3, **characterized in that** in the case of an airbag (2, 26; 42) which can be inflated in an approximately spherical shape in its final position, the retaining straps (4, 5; 32, 33; 49, 50, 51, 52) are provided on at least one circular or annular region (6) pointing in the direction of inflation, as a result of which the wall within the circular or annular region (6) can be inflated to form a sensing airbag (3; 29; 46, 47, 48), and
**in that** the wall regions adjoining the circular or annular region (6) can already be inflated during the formation of the sensing airbag (3; 29; 46, 47, 48) to form an airbag ring.

5. Safety device for a motor vehicle having a multi-chamber airbag according to Claim 3 or Claim 4, **characterized in that** the retaining straps (4, 5; 32, 33; 49, 50, 51, 52) are formed as flexible bulkhead walls with through-flow openings, and as a result have, before the tearing, a throttle effect between the gas flowing directly into the sensing airbag (3; 29; 46, 47, 48) and adjoining parts (11, 12; 30, 31; 65, 66) of the airbag chamber.

6. Safety device for a motor vehicle having a multi-chamber airbag according to one of Claims 1 to 5, **characterized in that** the gas flows essentially radially into the multi-chamber airbag (2; 26), at least outside the region of the sensing airbag (3; 29) via a diffuser.

7. Safety device for a motor vehicle having a multi-chamber airbag according to Claim 1, **characterized in that** at least one, preferably a plurality of finger-like sensing airbags (74, 75, 76), which are inflated together and essentially at the start of the inflation phase as a result of appropriate geometry, are formed on the impact face of at least one main chamber (73) of an airbag (71), directed approximately in the direction of inflation.

8. Safety device for a motor vehicle having a multi-chamber airbag according to Claim 7, **characterized in that** free ends of a plurality of sensing airbags (74, 75, 76) are connected by means of a perforated film or by means of a net (87).

9. Safety device for a motor vehicle having a multi-chamber airbag according to Claim 1, **characterized in that**, as the sensing airbag, an airbag chamber (93) is inflated relatively far in a downward direction toward a normal position of a vehicle occupant, and for complete activation a further thorax airbag chamber (94), adjoining the front region of the sensing airbag (93) in the upward direction, is inflated through the sensing airbag (93) and a head airbag chamber (95) is inflated subsequent to the thorax airbag chamber (94).

10. Safety device for a motor vehicle having a multi-chamber airbag according to one of Claims 1 to 9, **characterized in that**, when the sensing airbag (3; 29; 46, 47, 48; 74, 75, 76; 93) impacts against an obstacle not located in the normal position, the touch detection device (16; 34; 53, 54, 55; 79, 80) is composed of a speed and/or acceleration measuring device for the expansion of the sensing airbag (3; 29; 46, 47, 48; 74, 75, 76; 93) in conjunction with a downstream threshold value device, the threshold value device outputting the control signal for the gas generator control device when the speed and/or acceleration drops below a predefined speed and/or acceleration set point value.

11. Safety device for a motor vehicle having a multi-chamber airbag according to Claim 10, **characterized in that** the speed measuring device is composed of an instrument cord (17; 57, 61, 63; 81, 83), preferably with a bar code attached, and an assigned photoelectric barrier (18; 58, 62, 64; 82, 85) with signal evaluation means, the instrument cord (17; 57, 61, 63; 81, 83) being attached by one end to the front inner end of the respective sensing airbag (3; 46, 47, 48; 74, 75, 76; 93) and being entrained by the expansion of the airbag (2; 42; 71; 91) in the tensed state, and
**in that** the photoelectric barrier (18; 58, 62, 64; 82, 85) is provided in a spatially fixed fashion and the instrument cord (17; 57, 61, 63; 81, 83) is correspondingly pulled by the latter, the pulling-through speed being preferably capable of being sensed and measured by means of the bar code which moves past, and a cord brake being provided in order to ensure a specific, relatively low cord tension in the region of the photoelectric barrier (18; 58, 62, 64; 82, 85).

12. Safety device for a motor vehicle having a multi-chamber airbag according to one of Claims 1 to 11, **characterized in that** the touch detection device (34) is composed of switch contacts (35, 36, 37) in the front region of the sensing airbag (29), which change their relative position when the sensing airbag (29) impacts against an obstacle (38) and, as a control signal, open or preferably close, a circuit.

13. Safety device for a motor vehicle having a multi-chamber airbag according to Claim 12, **characterized in that** the switch contacts (35, 36, 37) are so far apart in the limit position of the airbag (26) that contact can no longer be formed in order to close a circuit.

14. Safety device for a motor vehicle having a multi-chamber airbag according to one of Claims 1 to 13, **characterized in that** the gas generator (43) is a multi-stage generator which can be controlled by means of the control device,
**in that**, in order to inflate the sensing airbag (46, 47, 48), a first stage (44) is fired, and **in that** when the touch detector (53, 54, 55) responds by outputting a control signal, further stages (45) are not fired by the control device.

15. Safety device for a motor vehicle having a multi-chamber airbag according to one of Claims 1 to 14, **characterized in that**, in particular when a gas generator (15; 28; 72; 92) is used with just one stage, the gas generator (15; 27; 72; 92), when the touch detector (16; 34; 79, 80) responds by outputting a control signal, is decoupled from the control device with respect to the gas quantity flowing into the multi-chamber airbag (2; 26; 71, 79).

16. Safety device for a motor vehicle having a multi-chamber airbag according to Claim 15, **characterized in that** the control device comprises a pyrotechnic element (21; 28; 86) which can be activated by the control signal and has a connected slide shutter with which the gas inlet opening into the airbag (2; 26; 71; 91) can be shut off and at the same time a bypass can be opened.

## Revendications

1. Dispositif de sécurité pour un véhicule automobile comportant :
- un coussin gonflable de sécurité à plusieurs chambres qui peut être gonflé par au moins un générateur de gaz (15; 27; 43; 72; 92) apte à être activé en cas de choc sur le véhicule,
- un dispositif palpeur (16; 34; 53, 54, 55; 79; 80) qui est relié au coussin gonflable de sécurité à plusieurs chambres et qui, lorsque ce dernier vient percuter un obstacle (19, 38) éventuellement présent, en particulier un passager situé en dehors d'une position normale, délivre un signal de commande apte à être évalué au moins pendant la phase de gonflement du coussin gonflable de sécurité,
- un dispositif de commande de la quantité de gaz pénétrant dans le coussin gonflable de sécurité à plusieurs chambres (2; 26; 42; 71; 91), tandis que le dispositif de commande est associé au générateur de gaz (15; 27; 43; 72; 92) et est relié au dispositif palpeur (16; 34; 53, 54, 55; 79; 80), et lorsqu'il en reçoit un signal de commande, il interrompt ou au moins réduit la poursuite du gonflement du coussin gonflable de sécurité (2; 26; 42; 71; 91) à plusieurs chambres par le générateur de gaz (15; 27; 43; 72; 92),
**caractérisé en ce que**
le coussin gonflable de sécurité (2; 26; 42; 71; 91) à plusieurs chambres présente au moins un coussin gonflable de sécurité (3; 29; 46, 47, 48; 74, 75, 76; 93) faisant fonction de palpeur, de volume relativement petit, en forme de doigt et apte à être gonflé rapidement par une faible énergie, et qui peut être gonflé et/ou déplacé avec une fonction de soutien dans la zone de gonflement d'au moins une autre chambre (11, 12; 30, 31; 65, 66; 73; 94, 95) de plus grand volume du coussin gonflable de sécurité et détecte l'impact contre l'obstacle (19; 38) éventuellement présent dans cette zone, en particulier le passager situé en dehors d'une position normale.

2. Dispositif de sécurité pour un véhicule automobile comportant un coussin gonflable de sécurité à plusieurs chambres selon la revendication 1, **caractérisé en ce que** le coussin gonflable de sécurité palpeur (93) au moins présent est une chambre séparée d'un coussin gonflable de sécurité à plusieurs chambres, qui peut être gonflée avant au moins une autre chambre du coussin gonflable de sécurité présentant une fonction de soutien.

3. Dispositif de sécurité pour un véhicule automobile comportant un coussin gonflable de sécurité à plusieurs chambres selon la revendication 1, **caractérisé en ce qu'**au moins un coussin gonflable de sécurité palpeur (3; 29; 46, 47, 48) peut être formé sur une plus grande chambre (11, 12; 30, 31; 65, 66) du coussin gonflable de sécurité par des bandes de reprise (4, 5; 32, 33; 49, 50, 51, 52), les bandes de reprise (4, 5; 32, 33; 49, 50, 51, 52) étant disposées sur des zones de paroi situées autour de la zone arrière du coussin gonflable de sécurité palpeur (3; 29; 46, 47, 48) et empêchant en cet endroit le déploiement d'au moins des parties de la paroi lors de l'opération de gonflement, de telle sorte que le coussin gonflable de sécurité palpeur (3; 29; 46, 47, 48) se gonfle en premier,
et **en ce que** les bandes de reprise (4, 5; 32, 33; 49, 50, 51, 52) présentent au moins un emplacement de rupture sous une force limitée et après la formation du coussin gonflable de sécurité palpeur (3; 29; 46, 47, 48), se déchirent lors d'une augmentation de la pression, pour ainsi libérer le déploiement de l'ensemble de la chambre du coussin gonflable de sécurité.

4. Dispositif de sécurité pour un véhicule automobile comportant un coussin gonflable de sécurité à plusieurs chambres selon la revendication 3, **caractérisé en ce que** pour un coussin gonflable de sécurité (2; 26; 42) apte à être gonflé sensiblement en forme de sphère dans sa position finale, les bandes de reprise (4, 5; 32, 33; 49, 50, 51, 52) sont installées dans au moins une zone circulaire ou annulaire (6) tournée dans la direction du gonflement, grâce à quoi la paroi peut être gonflée en un coussin gonflable de sécurité palpeur (3; 29; 46, 47, 48) à l'intérieur de la zone circulaire ou annulaire (6), et
**en ce que** les parties de paroi adjacentes à la zone circulaire ou annulaire (6) peuvent être gonflées en un coussin gonflable de sécurité en anneau pendant la formation du coussin gonflable de sécurité palpeur (3; 29; 46, 47, 48).

5. Dispositif de sécurité pour un véhicule automobile comportant un coussin gonflable de sécurité à plusieurs chambres selon la revendication 3 ou la revendication 4, **caractérisé en ce que** les bandes de reprise (4, 5; 32, 33; 49, 50, 51, 52) sont configurées comme cloisons flexibles de séparation qui présentent des ouvertures de passage pour l'écoulement et qui, avant la déchirure, permettent au gaz de pénétrer directement dans le coussin gonflable de sécurité palpeur (3; 29; 46, 47, 48) mais freinent sa pénétration dans les parties adjacentes (11, 12; 30, 31; 65, 66) des chambres du coussin gonflable de sécurité.

6. Dispositif de sécurité pour un véhicule automobile comportant un coussin gonflable de sécurité à plusieurs chambres selon l'une des revendications 1 à 5, **caractérisé en ce qu'**au moins à l'extérieur de la zone du coussin gonflable de sécurité palpeur (3; 29), la pénétration du gaz dans le coussin gonflable de sécurité à plusieurs chambres (2; 26) s'effectue essentiellement radialement par l'intermédiaire d'un diffuseur.

7. Dispositif de sécurité pour un véhicule automobile comportant un coussin gonflable de sécurité à plusieurs chambres selon la revendication 1, **caractérisé en ce qu'**au moins un, de préférence plusieurs coussins gonflables de sécurité palpeurs (74, 75, 76) en forme de doigt, qui sont gonflés ensemble et essentiellement au début de la phase de gonflement grâce à une géométrie appropriée, sont formés sur la surface de percussion d'au moins une chambre principale (73) d'un coussin gonflable de sécurité (71), laquelle chambre est orientée sensiblement dans la direction de gonflement.

8. Dispositif de sécurité pour un véhicule automobile comportant un coussin gonflable de sécurité à plusieurs chambres selon la revendication 7, **caractérisé en ce que** les extrémités libres de plusieurs coussins gonflables de sécurité palpeurs (74, 75, 76) sont reliées par une feuille perforée ou par un filet (87).

9. Dispositif de sécurité pour un véhicule automobile comportant un coussin gonflable de sécurité à plusieurs chambres selon la revendication 1, **caractérisé en ce qu'**une chambre (93) du coussin gonflable de sécurité servant de coussin gonflable de sécurité palpeur est gonflée relativement loin dans le bas en direction d'une position normale d'un passager, et pour une activation complète, une autre chambre de thorax (94) du coussin gonflable de sécurité, qui se raccorde dans le haut à la zone avant du coussin gonflable de sécurité palpeur (93) est gonflée à travers le coussin gonflable de sécurité palpeur (93), une chambre de tête (95) du coussin gonflable de sécurité, disposée sur la chambre de thorax (94) du coussin gonflable de sécurité, étant ensuite gonflée.

10. Dispositif de sécurité pour un véhicule automobile comportant un coussin gonflable de sécurité à plusieurs chambres selon l'une des revendications 1 à 9, **caractérisé en ce que** le dispositif palpeur (16; 34; 53, 54, 55; 79; 80) qui détecte la percussion du coussin gonflable de sécurité palpeur (3; 29; 46, 47, 48; 74, 75, 76; 93) sur un obstacle non situé dans une position normale est constitué d'un dispositif de mesure de la vitesse et/ou de l'accélération de l'agrandissement du coussin gonflable de sécurité palpeur (3; 29; 46, 47, 48; 74, 75, 76; 93) associé à un dispositif à valeur de seuil raccordé en aval, et au cas où une valeur de consigne de vitesse et/ou d'accélération n'est pas atteinte, le dispositif à valeur de seuil délivre le signal de commande pour le dispositif de commande du générateur de gaz.

11. Dispositif de sécurité pour un véhicule automobile comportant un coussin gonflable de sécurité à plusieurs chambres selon la revendication 10, **caractérisé en ce que** le dispositif de mesure de vitesse est constitué d'un cordon de mesure (17; 57; 61, 63; 81, 83) qui porte de préférence un code à barres et d'une barrière lumineuse associée (18; 58, 62, 64; 82, 85) avec évaluation du signal, le cordon de mesure (17; 57; 61, 63; 81, 83) étant fixé par une extrémité à l'extrémité intérieure avant du coussin gonflable de sécurité palpeur (3; 46, 47, 48; 74, 75, 76; 93) concerné et étant amené à l'état tendu lors de l'agrandissement du coussin gonflable de sécurité (2; 42; 71; 91), et
**en ce que** la barrière lumineuse (18; 58, 62, 64; 82, 85) est installée en position fixe et le cordon de mesure (17; 57; 61, 63; 81, 83) est tendu de manière correspondante à travers la barrière lumineuse, la vitesse de traversée étant détectable et mesurable, de préférence optiquement par l'intermédiaire du code à barres passant devant la barrière lumineuse, un frein de cordon étant prévu dans la zone de la barrière lumineuse (18; 58, 62, 64; 82, 85) pour assurer une tension définie relativement faible du cordon.

12. Dispositif de sécurité pour un véhicule automobile comportant un coussin gonflable de sécurité à plusieurs chambres selon l'une des revendications 1 à 11, **caractérisé en ce que** le dispositif palpeur (34) est constitué de contacts de commutation (35, 36, 37) qui sont situés dans la zone avant du coussin gonflable de sécurité palpeur (29) et qui changent de position relative lors de la percussion du coussin gonflable de sécurité palpeur (29) sur un obstacle (38), pour ouvrir ou de préférence fermer un circuit de commutation en tant que signal de commande.

13. Dispositif de sécurité pour un véhicule automobile comportant un coussin gonflable de sécurité à plusieurs chambres selon la revendication 12, **caractérisé en ce que** dans la position finale du coussin gonflable de sécurité (26), les contacts de commutation (35, 36, 37) sont écartés l'un de l'autre de telle sorte qu'aucun contact de fermeture d'un circuit de commutation n'est plus possible.

14. Dispositif de sécurité pour un véhicule automobile comportant un coussin gonflable de sécurité à plusieurs chambres selon l'une des revendications 1 à 13, **caractérisé en ce que** le générateur de gaz (43) est un générateur à plusieurs étages apte à être commandé par le dispositif de commande, **en ce qu'**un premier étage (44) est allumé pour le gonflement du coussin gonflable de sécurité palpeur (46, 47, 48), et **en ce que** lorsque le dispositif palpeur (53, 54, 55) est sollicité avec émission d'un signal de commande, l'allumage d'étages (45) supplémentaires est interrompu par le dispositif de commande.

15. Dispositif de sécurité pour un véhicule automobile comportant un coussin gonflable de sécurité à plusieurs chambres selon l'une des revendications 1 à 14, **caractérisé en ce qu'**en particulier lors de l'utilisation d'un générateur de gaz (15; 27; 72; 92) comptant un seul étage, lorsque le dispositif palpeur (16; 34; 79; 80) est sollicité et délivre un signal de commande, le dispositif de commande bloque le débit de gaz envoyé par le générateur de gaz (15; 27; 72; 92) dans le coussin gonflable de sécurité (2; 26; 71; 91) à plusieurs chambres.

16. Dispositif de sécurité pour un véhicule automobile comportant un coussin gonflable de sécurité à plusieurs chambres selon la revendication 15, **caractérisé en ce que** le dispositif de commande comprend un élément pyrotechnique (21; 28; 86) apte à être activé par le signal de commande et auquel est raccordé un écran coulissant qui permet de fermer l'ouverture d'entrée de gaz dans le coussin gonflable de sécurité (2; 26; 71; 91) et en même temps d'ouvrir une dérivation.
